(19) Europäisches Patentamt
European Patent Office
Office européen des brevets

(11) Publication number: **0 055 292**
**B1**

## (12) EUROPEAN PATENT SPECIFICATION

(45) Date of publication of patent specification: **05.03.86**

(21) Application number: **81902054.6**

(22) Date of filing: **30.06.81**

(86) International application number:
**PCT/HU81/00027**

(87) International publication number:
**WO 82/00134 21.01.82 Gazette 82/03**

(51) Int. Cl.⁴: **C 02 F 3/12**

(54) APPARATUS FOR TREATING LIQUIDS.

(30) Priority: **03.07.80 HU 165380**

(43) Date of publication of application:
**07.07.82 Bulletin 82/27**

(45) Publication of the grant of the patent:
**05.03.86 Bulletin 86/10**

(84) Designated Contracting States:
**AT DE FR GB NL SE**

(56) References cited:
**BE-A- 365 228**
**CH-A- 443 166**
**CH-A- 530 940**
**DE-A-1 784 501**
**DE-A-1 932 640**
**DE-A-2 522 842**
**DE-A-2 816 390**
**DE-A-2 842 651**
**DE-A-2 943 335**
**DE-B-2 043 148**
**FR-A-2 154 851**
**FR-A-2 379 483**
**GB-A- 970 470**

(73) Proprietor: **NOVEX FOREIGN TRADE CO. LTD.**
**FOR DEVELOPMENT AND**
**COMMERCIALIZATION OF INVENTIONS**
**P.O. Box 62 Március 15 tér 1**
**H-1346 Budapest (HU)**

(72) Inventor: **GYULAVARI, Imre**
**Poroszlai u. 20**
**H-4032 Debrecen (HU)**

(74) Representative: **Lemcke, Rupert, Dipl.-Ing. et al**
**Amalienstrasse 28 Postfach 4026**
**D-7500 Karlsruhe 1 (DE)**

(56) References cited:
**GB-A-1 373 189**
**GB-A-2 011 795**
**US-A-3 534 857**
**US-A-3 809 242**
**US-A-3 900 394**
**US-A-3 947 358**

Courier Press, Leamington Spa, England.

## Description

### Technical Field

The invention concerns an apparatus for the treatment of liquid household and industrial sewages containing organic contaminants to effect biological, aeration and sedimentation comprising a circular, annular, quadratic or elongated oblong shaped liquid receiving basin — e.g. of the known Carroussel-system — containing one or more partition walls forming a path — aerating channels — recurring into itself and one or more propellers or rotors with horizontal and/ or vertical axles for moving said liquid sewage in a horizontal, vertical, or horizontal and vertical direction; one or more aerators with a horizontal or vertical axle and/or one or more fixed air blowers for aerating said liquid sewage; expediently one or more secondary sedimentators with oblique lamellae arranged either longitudinally with respect to each other or in an arrangement with a circular top-view are connected directly thereto.

### Background Art

The so-called biological sewage treatment systems are well known, in which the dissolved organic substances are removed from the liquid or sewage in such a manner, that the sewage is led into the aerating basin having been saturated with the mass of activated sludge with bacteria; the aerated sewage is led into the secondary sedimentation basin, where the sludge is separated by sedimentation and recirculated into the aerating basin, while the purified water is discharged from the system. An apparatus and a method of this kind are already known from the Hungarian patent No. 166 160, which are serving for the circulation and aeration of liquids in course of the operation of biological sewage treatment plants i.e. oxidating trenches. In this known installation the streaming energy of the liquid to be treated is increased by means of a pump and by using the liquid with the increased energy a water-jet pump is actuated, while air is introduced through the pump-wheel. In course of said process sedimentation and circulation are not separated.

An apparatus is already known from German patent No. 24 18 586. In this known installation biological sewage treatment can be carried out e.g. in a pool, dividing the water surface into pathways by means of separation walls. In the path, in a predetermined mutual distance from each other, air-water injecting means are producing a horizontal stream (the water is allowed to stream in a horizontal direction). In this case aeration and circulation are not separated either.

Another apparatus for the biological sewage treatment is known from the DT—OS 25 22 842 comprising an elongated channel, wherein both the aeration and the flow of the liquid are caused by one or more aerating rotor having vertical axle, situated into the partition wall of the basin or channel. Also in this case aeration and circulation of the liquid to be treated are not separated.

The German patent-application DE—OS 28 16 390 is describing a sewage treatment plant using the activated sludge process, in which several aerating trenches running parallel and having been connected in series are interconnected by means of the sections of circular arches (90° or 180°). At the ends of the separation walls separating the single aerating treches aerating wheels with a vertical axle are arranged, while in every second trench pipe-propellers with a horizontal axle are to be found. Accordingly, with this process circulation of the liquid and aeration have been already separated. The system is known as the Carrousel-system.

The known biological sewage treatment plants using activated sludge do not solve optimally the task of aerating and sedimentation. Efficiency is low regarding both to energy utilization and purification, simultaneously space requirement is large, at the same time several draw backs are involved in respect to operational technics.

### Disclosure of Invention

The aim of the invention is partly to eliminate the disadvantages of the known plants serving for the treatment and purification of liquids, sewages, partly to provide an apparatus, which — when compared to the known solutions — is working with a higher efficiency and increased economicalness.

A further task lies in to enable the better utilization of space, the so-called intensification, representing a considerable problem all over the world. So e.g. on worldscale several thousands of the so-called oxidising trenches are operated, the majority of which is overburdened, accordingly, problems relating to enlarging have to be confronted with. Often the erection of a new installation becomes impossible because of lack of space. By using the invention, problems of said character can be successfully solved.

A further task of the invention lies in to ensure better oxygen introduction and to promote energy savings.

According to the invention the task set is solved in such a manner that under said aerating channels vertical aerating shafts are arranged forming a common space with said channels and the shafts comprise air-injecting grids, the depth of said aerating shafts being at least 1 meter below the bottom of the aerating channels.

The invention is based on the recognition, in so far as biological treatment of liquids and sewages, respectively, by using the purification system with the activated sludge known in itself may be realized only by a horizontal flow taking place in channels recurring into themselves, simultaneously economicalness of the process can be ensured only by separating oxygen introduction and circulation. Oxygen introduction may be automatized. One or more other features or auxiliary apparatus can be combined with the basin embodiment which has been detailed above, resulting in efficient and economical combined apparatus.

In a preferred embodiment of the invention there is an aerating wheel with a vertical axle arranged in the basin receiving the sewage, in addition to the aerating shafts with air-injecting grids; the basin itself consists of transverse-flow aerating channels starting radially from said wheel having been separated by walls lying expediently perpendicularly to each other. At the ends of the partition walls there is an aertating wheel each arranged, provided with vertical axles. In the direction of the flow, in the channels lying behind the aerating wheels with the vertical axle there is expediently a propeller each with a horizontal axle. In the space between the channels lying advantageously perpendicularly to each other, there is a secondary sedimentator with oblique lamellae, showing a circular topview.

It seems to be advantageous, if at least the centrally arranged aerating wheel is operated with a speed of rotation, which can be automatically changed in dependence of the prevailing oxygen demand.

The basin of the Carrousel-system known in itself can be advantageously used, in which at the ends of the partition walls of the parallel running aerating channels having been connected in series, aerating wheels with a vertical axle are to be found. In the flow direction, in the channels behind said wheels propellers with a horizontal axle are arranged. The longitudinally arranged secondary sedimentator with the oblique lamellae, in which transverse flow is taking place, is connected to the aerating channels, expediently assembled therewith.

According to the invention energy savings are increased by the vertical aerating shafts provided with air injecting grids below the horizontal aerating channels, which are forming a common space. The mass of the bubbles arising from the shaft are travelling upwards in an oblique direction in the liquid streaming in a horizontal direction. As a consequence, staying time of the bubbles in the liquid can be considerably prolongated resulting in an increased specific oxygen transfer and energy savings. In a most advantageous embodiment the aerating shafts are formed as supporting pillars and the entire object is lying on said pillars, above the ground level. In such a manner the area below the object can be economically utilized e.g. for the emplacement of diverse auxiliary and complementary equipments.

In accordance with the invention specific oxygen transfer can be further increased by placing baffle plates above the aerating shafts, ascending in the direction of flow in the aerating channels resp. trenches in such a manner that the plates should overlap each other in their vertical projection. Expediently the angle of inclination of the baffle plates can be changed, the most advantageous value lies within the range between 1° and 45°, preferably between 2° and 5°. The baffle plates can be arranged in the entire height of the aeration channels or only in a partial height thereof. The baffle plates are made preferably of steel, aluminium or synthetic materials, in particular PVC, polyethylene, polypropylene or polystyrene.

Further advantages may be achieved by embossing the surface of the baffle plates.

By the application of the apparatus having been formed in accordance with the invention, several additional — surplus — effects could be achieved, which are unknown with the previously used arrangements; so e.g. by building-in the oblique baffle plates, especially if these are made of a synthetic material, specific capacity of the system using activated sludge can be considerably increased.

On the surface of the synthetic materials, due to the supply with oxygen, a biological film is formed representing an active decomposing surface, which is far increasing the load capacity of the system.

The circumstance is also to be considered as advantageous, in so far as the vertical aerating shafts and the previously mentioned baffle plates as well, can be assembled both into new and already existing plants, as a consequence, increase of capacity can be solved without a further space requirement with the several thousands of existing trenches being in operation. The aerating shafts may be formed of prefabricated concrete rings, representing an economical and time-saving solution.

The secondary sedimentation system being connected in a block-like manner to the plant requires an inconsiderable space only resulting in savings in area. When the shafts are formed as supporting pillars, the area having been left free by the shafts can be well utilized for the emplacement of e.g. an engine compartment, sludge-condenser or mechanical equipments for dehydrating the sludge, etc. Beyond savings in space, by the arrangement according to the invention operational costs may be also reduced.

Summing up what has been said, the apparatus according to the invention unites and combines all the advantages of the known systems, simultaneously eliminating the drawbacks thereof.

Brief Description of Drawings

The invention will be described in details by way of examples in the accompanying drawings, wherein:

Fig. 1 is a top-view of a preferred embodiment with a basin of the type Carrousel and the longitudinal secondary sedimentator;

Fig. 2 is a section through III—III of the embodiment according to Fig. 1.

Fig. 3 is a section through IV—IV of the embodiment according to Fig. 1 and

Fig. 4 is a longitudinal section of the equipment according to the invention.

Best Mode of Carrying Out the Invention

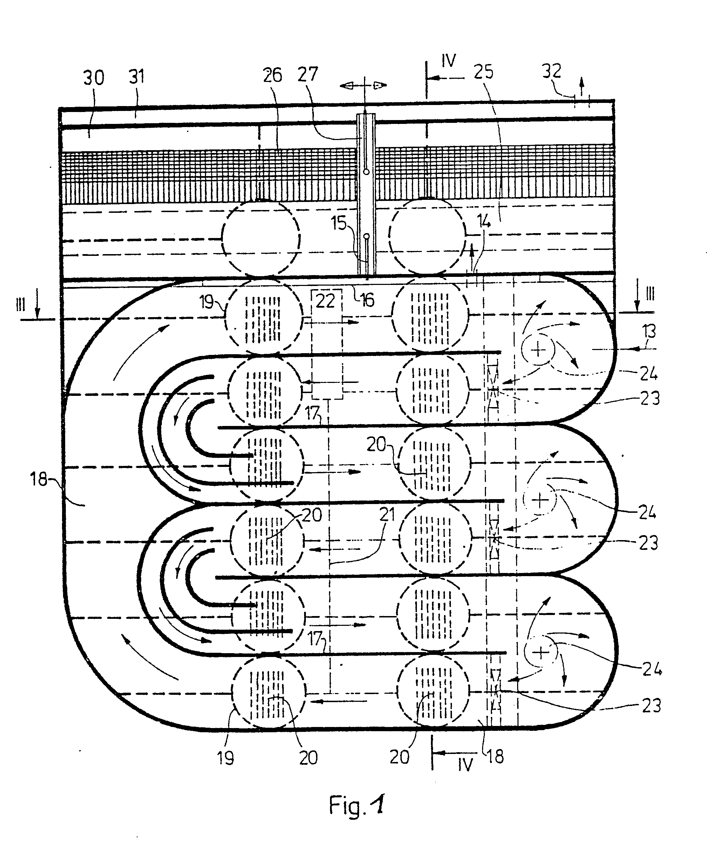

In Fig. 1 a well-known aerator of the Carrousel-system is to be seen. The raw water arrives through the duct 13 and is discharged through the duct 14 into the secondary sedimentator, which is a longitudinal secondary sedimentator with lamellae, in which the liquid is a streaming in a transverse flow. The recirculated sludge is returned through the duct 15 into the channel 16, or it is leaving the system in form of sludge excess. The aerating channels 18 are separated by means of the partition walls 17; in the aerating channels 18 the liquid is allowed to stream in a horizontal direction. The vertical aerating shafts 19 are built-in periodically in an optimal mutual distance, in the direction of flow; in the aerating shafts 19 there are the air-injecting grids 20, the duct 21 is connected partly to the air-injecting grid 20, partly to the compressor 22 supplying the air.

The air (gas) ascending from the aerating shafts 19 arrives at the aerating channel 18 and advances in a horizontal direction resulting in the prolongation of the contact time and in an increased efficiency of oxygen transfer. Stream in horizontal direction may be increased by the propellers 23 with the horizontal axles, in this case the aerating wheels 24 — the aerators — with the vertical axle are put out of service.

The sedimentator 25 is provided with the oblique lamellae 26; when the mixture to be sedimented is allowed to stream through the lamellae, a laminar flow and effective separation may be achieved. The sedimentator 25 is provided with the bridge construction 27 carrying the lamellae-washer 28 of the type JET. The immersing pump 29 serving for the recirculation of the sludge via the duct 15 is also suspended onto the bridge construction 27. The water having been purified and subjected to sedimentation is flowing below the overfall edge 30 and arrives at the overfall trough 31, from where it is discharged from the system through the duct 32.

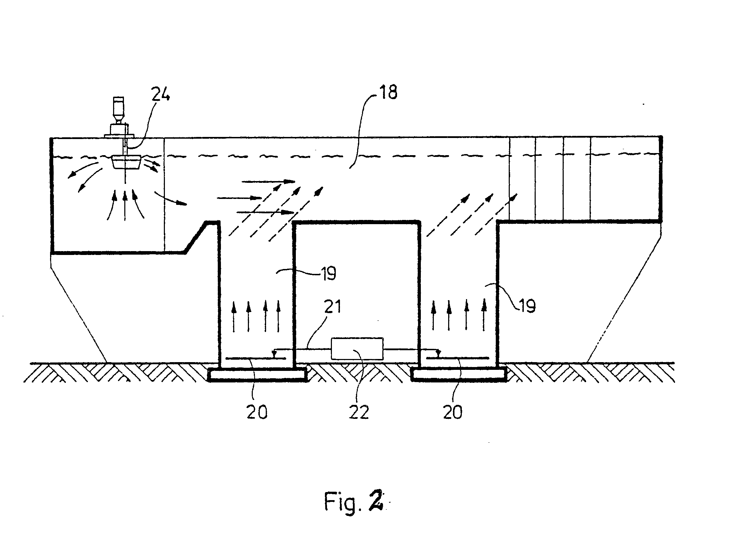

As it is to be seen in Fig. 2 the bubbles globing from the aerating shaft 19 are ascending in an oblique direction upwards under the influence of the horizontal flow in the aerating channels 18 prolonging in such a manner the duration of oxygen transfer. Compared to the ascension in a straight direction, the staying time of the air (gas) bubbles in the aerated mixture is 4—10 times longer.

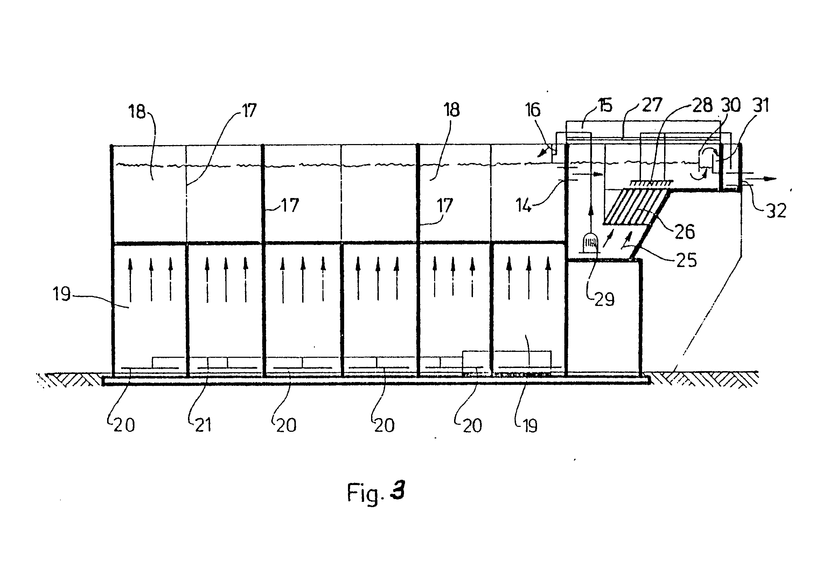

As it is to be seen in Fig. 3, the channels 18 are arranged about the ground level, as the shafts 19 are formed as supporting pillars. In such a manner a space of considerable extent is staying at disposal under the object, which can be economically utilized, being of utmost importance from the point of view of space saving.

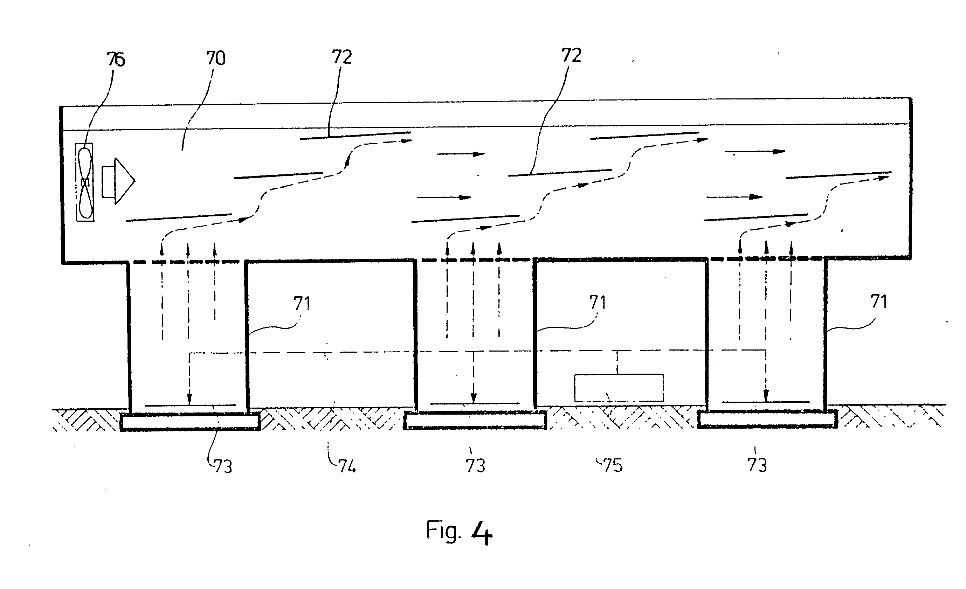

Above the aerating shafts 71 having been arranged in the channel with a horizontal flow (see Fig. 4) the baffle plates 72 are so arranged, that the baffle plates 72 rising in the direction of the stream should lie above each other in an overlapping manner. The air bubbles in the aerating shaft resp. globing therefrom are ascending while wandering from plate to plate and in course of their advance they come into contact with the baffle plates 72. In such a manner — compared to the unhindered vertical ascent — the staying time of the bubbles is about ten-times longer resulting in an increased efficiency of the oxygen transfer. The oblique baffle plates 72, having been made expediently of metal or a synthetic material, do not influence the flow taking place in a horizontal direction, at the same time a biological film is formed on their surface representing an active and useful surface which increases the efficiency of purification.

The angular position and height of the oblique baffle plates 72 can be expediently changed during operation. It goes without saying that the solution with the oblique baffle plates can be expediently used in any previously described apparatus, where the liquid is streaming in a horizontal direction in the channel, resulting in an increased economic efficiency. In the aerating shafts 71 there are air-injecting elements, a grid 73 each. These are supplied with air or gas, e.g. pure oxygen, by the air (gas) supply-device 75 through the duct 74.

In the channel 70 flow in a horizonal direction is ensured by the propeller 76, in such a manner putting into motion (circulation), turbulence and supply with oxygen are economically separated. The channel 70 is formed by a rectangle recurring in itself or a ring channel. Oxygen supply of the aerating shaft 71 is taking place by an automatically controlled system in dependence of the prevailing oxygen requirement.

## Claims

1. Apparatus for the treatment of liquid household and industrial sewages containing organic contaminants to effect biological purification, aeration and sedimentation comprising a circular, annular, quadratic or elongated oblong shaped liquid receiving basin — e.g. of the known Carroussel-system — containing one or more partition walls forming a path — aerating channels — recurring into itself and one or more propellers or rotors with horizontal and/or vertical axles for moving said liquid sewage in a horizontal, vertical, or horizontal and vertical direction; one or more aerators with a horizontal or vertical axle and/or one or more fixed air blowers for aerating said liquid sewage; expediently one or more secondary sedimentators with oblique lamellae arranged either longitudinally with respect to each other or in an arrangement with a circular top-view connected directly thereto, characterized in that under said aerating channels (18, 70) vertical aerating shafts (19, 71) are arranged forming a common space with said channels and shafts (19, 71) comprising air-injecting grids (20, 73), the depth of said aerating shafts (19, 71) being at least 1 meter below the bottom of the aerating channels (18, 70).

2. Apparatus of claim 1, wherein the vertical aerating shafts (19, 71) are supporting pillars and said apparatus extends above ground level to a height corresponding to the length of said shafts (19, 21).

3. Apparatus as claimed in claim 1 or 2, characterized in that the depth of the aerating shafts (19, 71) is between 1 and 35 meters, expediently between 3 and 10 meters.

4. Apparatus as claimed in any of the claims 1 to 3, characterized in that baffle plates (72) above the aerating shafts (19, 71) in the aerating channels (18, 70) extend upwards in the direction of the flow in such a manner that in their vertical projection they overlap.

5. Apparatus of claim 4, wherein the angle of inclination of the baffle plates (72) is between 1 degree and 45 degrees, expediently between 2 degrees and 5 degrees.

6. Apparatus as claimed in claim 4 or 5, characterized in that the baffle plates (72) are arranged in the entire height of the aerating channels (2, 18, 70).

7. Apparatus as claimed in claim 4 or 5, characterized in that the baffle plates (72) are arranged in a part of the height of the aerating channels (2, 18, 70).

8. Apparatus as claimed in any of the claims 4 to 7, characterized in that the baffle plates (72) are made of a material selected from the group consisting of steel, aluminium, PVC, polyethylene, polypropylene and polystyrene.

9. Apparatus as claimed in any of the claims 4 to 8, characterized in that the angle of inclination of the baffle plates (72) can be changed during operation.

10. Apparatus as claimed in any of the claims 1 to 9, characterized in that the surface of the baffle plates (72) is embossed.

11. Apparatus as claimed in any of the claims 4 to 10, characterized in that an aerating wheel with a vertical axle is in a basin which consists of cross flow aerating channels extending radially from said wheel; said channels separated by partition walls which are perpendicular to each other; an aerating wheel provided with vertical axle at the end of each partition walls; a propeller with a horizontal axle downstream in the direction of flow in each aerating channel behind the aerating wheels with the vertical axles; and a secondary sedimentator with oblique lamellae having a circular top-view, in the space between the aerating channels, perpendicular to each other.

12. Apparatus of claim 11, wherein the centrally arranged aerating wheel operates with a speed of rotation which is automatically changeable in response to the prevailing oxygen requirements.

13. Apparatus as claimed in any of the claims 1 to 10, characterized in that aerating wheels (24) with a vertical axle are in the basin of a Carroussel-system at the ends of the partition walls (17) of the parallel aerating channels (18) connected in series, propellers (23) with a horizontal axle in the liquid flow direction in the channels (18) behind said wheels (24); and connected to the aerating channels (18), longitudinally arranged secondary sedimentator (25) with oblique lamellae wherein the liquid flow is in a transverse direction.

**Revendications**

1. Appareil pour le traitement de rejets liquides ménagers et industriels contenant des contaminants organiques, afin d'effectuer l'épuration biologique, l'aération et la décantation, qui comprend un bassin de réception de liquide de forme circulaire, annulaire, rectangulaire ou allongée oblongue, par exemple du type Carrousel connu, comportant une ou plusieurs cloisons qui définissent un circuit fermé de canaux d'aération et un ou plusieurs propulseurs ou rotors à axe horizontal et/ou vertical pour déplacer ledit rejet liquide en direction horizontale, verticale ou horizontale et verticale; un ou plusieurs aérateurs à axe horizontal ou vertical et/ou un ou plusieurs surpresseurs d'air fixes pour aérer ledit rejet liquide; de préférence un ou plusieurs décanteurs secondaires à lamelles obliques disposés longitudionalement les uns par rapport aux autres ou circulairement en vue de dessus et raccordés directement au bassin, caractérisé en ce que des puits d'aération verticaux (19, 71) sont prévus sous les canaux d'aération (18, 70) de manière à former un espace commun avec ces canaux, les puits (19, 71) comportant des grilles (20, 73) d'injection d'air, la profondeur des puits d'aération (19, 71) étant au moins de 1 mètre au-dessous du fond des canaux d'aération (18, 70).

2. Appareil suivant la revendication 1, dans lequel les puits d'aération verticaux (19, 71) sont des piliers porteurs et l'appareil est placé au-dessus du niveau du sol à une hauteur correspondant à la longueur des puits (19, 71).

3. Appareil suivant la revendication 1 ou 2, caractérisé en ce que la profondeur des puits d'aération (19, 71) est comprise entre 1 et 35 m, et de préférence entre 3 et 10 mètres.

4. Appareil suivant l'une quelconque des revendications 1 à 3, caractérisé en ce que des plaques déflectrices (72), prévues dans les canaux d'aération (18, 70) au-dessus des puits d'aération (19, 71), sont inclinées vers le haut dans la direction de l'écoulement, de façon à se chevaucher en projection verticale.

5. Appareil suivant la revendication 4, dans lequel l'angle d'inclinaison des plaques déflectrices (72) est compris entre 1 degré et 45 degrés, et de préférence entre 2 degrés et 5 degrés.

6. Appareil suivant la revendication 4 ou 5, caractérisé en ce que les plaques déflectrices (72) sont prévues sur toute la hauteur des canaux d'aération (2, 18, 70).

7. Appareil suivant la revendication 4 ou 5, caractérisé en ce que les plaques déflectrices (72) sont prévues sur une partie de la hauteur des canaux d'aération (2, 18, 70).

8. Appareil suivant l'une quelconque des revendications 4 à 7, caractérisé en ce que les plaques déflectrices (72) sont fabriquées en une matière choisie dans le groupe comprenant l'acier, l'aluminium, le chlorure de polyvinyle, le polyéthylène, le polypropylène et le polystyrène.

9. Appareil suivant l'une quelconque des revendications 4 à 8, caractérisé en ce que l'angle d'inclinaison des plaques déflectrices (72) peut être modifié pendant le fonctionnement.

10. Appareil suivant l'une quelconque des revendications 1 à 9, caractérisé en ce que la surface des plaques déflectrices (72) est gaufrée.

11. Appareil suivant l'une quelconque des revendications 4 à 10, caractérisé en ce qu'une roue d'aération à axe vertical est placée dans un bassin constitué de canaux d'aération à courant croisé qui partent radialement de ladite roue; ces caneaux étant séparés par des cloisons perpendiculaires les unes aux autres; une roue d'aération à axe vertical étant prévue à l'extrémité de chaque cloison; un propulseur à axe horizontal étant prévu à l'aval dans la direction d'écoulement dans chaque canal d'aération, derrière les roues d'aération à axe vertical; et un décanteur secondaire à lamelles obliques de forme circulaire en vue de dessus étant prévu dans l'espace entre les canaux d'aération, perpendiculairement les uns aux autres.

12. Appareil suivant la revendication 11, dans lequel la roue d'aération située centralement fonctionne à une vitesse de rotation qui est réglable automatiquement en réponse à la demande effective d'oxygène.

13. Appareil suivant l'une quelconque des revendications 1 à 10, caractérisé en ce que des roues d'aération (24) à axe vertical sont prévues dans le bassin du type Carrousel aux extrémités des cloisons (17) de séparation des canaux parallèles d'aération (18) reliés en série; des propulseurs (23) à axe horizontal sont prévus dans les canaux (18) dans la direction d'écoulement du liquide, à l'arrière des dites roues (24); et un décanteur secondaire longitudinal (25) à lamelles obliques, dans lequel le liquide circule transversalement, est raccordé aus canaux d'aération (18).

**Patentansprüche**

1. Vorrichtung zur Behandlung von flüssigen, organische Verunreinigungen enthaltenden Haushalts- und Industrieabwässern zum Zwecke der biologischen Klärung, Belüftung und Sedimentation mit einem runden, ringförmigen, quadratischen oder verlängert rechteckigen Bekken zur Flüssigkeitsaufnahme — beispielsweise des bekannten Carroussel-Systems — enthaltend eine oder mehrere eine in sich selbst zurückkehrende Bahn — Belüftungskanäle — bildende Trennwände und einen oder mehrere Propeller oder Rotoren mit horizontaler und/oder vertikaler Achse zur Bewegung der genannten flüssigen Abwässer in horizontaler, vertikaler oder horizontaler und vertikaler Richtung, ferner mit einem oder mehreren Belüftern mit horizontaler oder vertikaler Achse und/oder einem oder mehreren ortsfesten Luftgebläsen zur Belüftung der genannten flüssigen Abwässer sowie zweckmäßig mit einem oder mehreren damit unmittelbar verbundenen Nachabsetzern mit schrägen Lamellen, die entweder einander der Länge nach oder in einer Anordnung mit kreisförmiger Oberansicht zugeordnet sind, dadurch gekennzeichnet, daß unter den genannten Belüftungskanälen (18, 70) vertikale Belüftungsschächte (19, 71) mit den Belüftungskanälen einen gemeinsamen Raum bildend angeordnet sind und daß die Schächte (19, 71) Luftzufuhrgitter (20, 73) enthalten, wobei die Tiefe der genannten Belüftungsschächte (19, 71) wenigstens 1 m unterhalb des Bodens der Belüftungskanäle (18, 70) liegt.

2. Vorrichtung nach Anspruch 1, dadurch gekennzeichnet, daß die vertikalen Belüftungsschächte (19, 71) Tragsäulen sind und daß sich die Vorrichtung oberhalb des Grundniveaus bis zu einer mit der Länge der genannten Schächte (19, 71) korrespondierenden Höhe erstreckt.

3. Vorrichtung nach Anspruch 1 oder 2, dadurch gekennzeichnet, daß die Tiefe der Belüftungsschächte (19, 71) zwischen 1 und 35 m, zweckmäßig zwischen 3 und 10 m liegt.

4. Vorrichtung nach einem der Ansprüche 1 bis 3, dadurch gekennzeichnet, daß sich oberhalb der Belüftungsschächte (19, 71) in den Belüftungskanälen (18, 70) Ablenkplatten (72) in Richtung des Stromes aufwärts erstrecken in einer solchen Weise, daß sich ihre vertikalen Projektionen überlappen.

5. Vorrichtung nach Anspruch 4, dadurch gekennzeichnet, daß der Neigungswinkel der Ablenkplatten (72) zwischen 1° und 45°, zweckmäßig zwischen 2° und 5° liegt.

6. Vorrichtung nach Anspruch 4 oder 5, dadurch gekennzeichnet, daß die Ablenkplatten (72) über die gesamte Höhe der Belüftungskanäle (18, 70) angeordnet sind.

7. Vorrichtung nach Anspruch 4 oder 5, dadurch gekennzeichnet, daß die Ablenkplatten (72) über einen Teil der Höhe der Belüftungskanäle (18, 70) angeordnet sind.

8. Vorrichtung nach einem der Ansprüche 4 bis 7, dadurch gekennzeichnet, daß die Ablenkplatten (72) aus einem Material hergestellt sind, das ausgewählt ist aus der Gruppe bestehend aus Stahl, Aluminium, PVC, Polyäthylen, Polypropylen und Polystyrol.

9. Vorrichtung nach einem der Ansprüche 4 bis 8, dadurch gekennzeichnet, daß der Neigungswinkel der Ablenkplatten (72) im Betrieb veränderbar ist.

10. Vorrichtung nach einem der Ansprüche 1 bis 9, dadurch gekennzeichnet, daß die Oberfläche der Ablenkplatten (72) geprägt ist.

11. Vorrichtung nach einem der Ansprüche 4 bis 10, gekennzeichnet, durch ein Belüftungsrad mit vertikaler Achse in einem Becken, das aus sich kreuzenden Belüftungskanälen, die sich ausgehénd vom genannten Rad radial erstrecken, besteht, die genannten Kanäle voneinander getrennt durch zueinander senkrechte Trennwände, ein Belüftungsrad mit vertikaler Achse am Ende jeder der Trennwände, einen Propeller mit horizontaler Achse in Strömungsrichtung stromabwärts in jedem Belüftungskanal hinter den Belüftungsrädern mit vertikaler Achse und einen Nachabsetzer mit schrägen Lamellen und kreisförmiger Oberansicht im Zwischenraum zwischen den zueinander senkrechten Belüftungskanälen.

12. Vorrichtung nach Anspruch 11, dadurch gekennzeichnet, daß das zentral angeordnete Belüftungsrad mit einer Drehgeschwindigkeit umläuft, die selbsttätig in Bezug auf die gegebenen Sauerstoffanforderungen veränderbar ist.

13. Vorrichtung nacn einem der Ansprüche 1 bis 10, dadurch gekennzeichnet, daß Belüftungsräder (24) mit vertikaler Achse in dem Becken eines Carroussel-Systems an den Enden der Trennwände (17) der parallelen Belüftungskanäle (18) in Serie miteinander verbunden sind, daß in Strömungsrichtung der Flüssigkeit hinter den genannten Rädern (24) Propeller (23) mit einer horizontalen Achse in den Kanälsen (18) angeordnet sind, und daß mit den Belüftungskanälen (18) längs angeordnet ein Nachabsetzer (25) mit schrägen Lamellen verbunden ist, in dem die Flüssigkeit in Querrichtung strömt.

Fig. 1

Fig. 2

Fig. 3

Fig. 4

4